# EUROPEAN PATENT APPLICATION

(11) **EP 2 772 870 A2**
(43) Date of publication of application: **03.09.2014**
(21) Application number: 14156353.6
(22) Date of filing: 24.02.2014
(51) Int. Cl.: G06K 9/00

(54) **Image forming apparatus and image forming method**

(30) Priority: 28.02.2013 JP 2013038306
(71) Applicant: Kyocera Document Solutions Inc., Osaka-shi, Osaka 540-8585 (JP)
(72) Inventor: Honda, Toru, Osaka-shi, Osaka 540-8585 (JP)
(74) Representative: Plougmann & Vingtoft A/S

(57) **Abstract**

An image forming apparatus (1) and an image forming method according to the present disclosure read a document as image data (95); store the image data(95); determine a range of a map on the image data (95) and recognize character information and graphic information from the range of the map; estimate an area of the map, based on the character information or the graphic information; acquire map data (97) of the area of the map; add additional information to the map data (97); replace the range of the map on the stored image data (95) with the map data (97) containing the additional information; and output the image data (95) in which the range of the map has been replaced.

## Description

### BACKGROUND

The present disclosure relates to an image forming apparatus and an image forming method for forming an image.

Conventionally, an image forming apparatus is known such as a multifunction peripheral (MFP) capable of printing a document or an image. In addition, in recent years, various map services are present on the Web. A user accesses any of these map services by a Web browser or the like of a PC (Personal Computer), and specifies the address of a destination or the like. In response, a server of the map service searches for a map of the periphery of the address or the like from a database, and transmits the map to the PC of the user. The user receives the searched map, views the map by the Web browser or the like, and prints the map by a connected multifunction peripheral or the like. The user visits the destination, carrying the printed map. Thus, if a user uses such map services, the user only needs to print and carry a map of a necessary area.

In addition, in a conventional system in which maps are prepared on a database of a PC so that only a map of a necessary area is selected on the PC and then printed, it is possible to read the printed map on which a user has written information by hand, by an optical reading device later, and then store the read data into a storage medium.

### SUMMARY

An image forming apparatus according to one aspect of the present disclosure includes a document reading portion, a storage portion, a character graphic recognizing portion, a map area information estimating portion, a map data acquiring portion, an additional information adding portion, a map image replacing portion, and an image forming portion. The document reading portion reads a document as image data. The storage portion stores the image data. The character graphic recognizing portion determines a range of a map on the image data stored in the storage portion, and recognizes character information and graphic information from the range of the map. The map area information estimating portion estimates an area of the map, based on the character information or the graphic information recognized by the character graphic recognizing portion. The map data acquiring portion acquires map data of the area of the map estimated by the map area information estimating portion. The additional information adding portion adds additional information to the map data acquired by the map data acquiring portion. The map image replacing portion replaces the range of the map on the image data stored in the storage portion with the map data containing the additional information added by the additional information adding portion. The image forming portion outputs the image data in which the range of the map has been replaced by the map image replacing portion.

An image forming method according to another aspect of the present disclosure includes reading a document as image data; storing the image data; determining a range of a map on the image data and recognizing character information and graphic information from the range of the map; estimating an area of the map, based on the character information or the graphic information; acquiring map data of the area of the map; adding additional information to the map data; replacing the range of the map on the stored image data with the map data containing the additional information; and outputting the image data in which the range of the map has been replaced.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a schematic sectional view showing the internal configuration of an image forming apparatus 1 according to an embodiment of the present disclosure.
FIG. 2 is a block diagram showing the control configuration of the image forming apparatus 1 according to the embodiment of the present disclosure.
FIG. 3 is a flowchart of map information adding processing according to the embodiment of the present disclosure.
FIG. 4 is a flowchart of map position recognition processing according to the embodiment of the present disclosure.
FIG. 5A and FIG. 5B are conceptual diagrams of OCR for a map range on scan image data 95 according to the embodiment of the present disclosure.
FIG. 6 is a flowchart of keyword navigation adding processing according to the embodiment of the present disclosure.
FIG. 7 is a conceptual diagram of keyword input and a navigation screen according to the embodiment of the present disclosure.

### DETAILED DESCRIPTION

### <Embodiments>

### {Configuration of image forming apparatus 1}

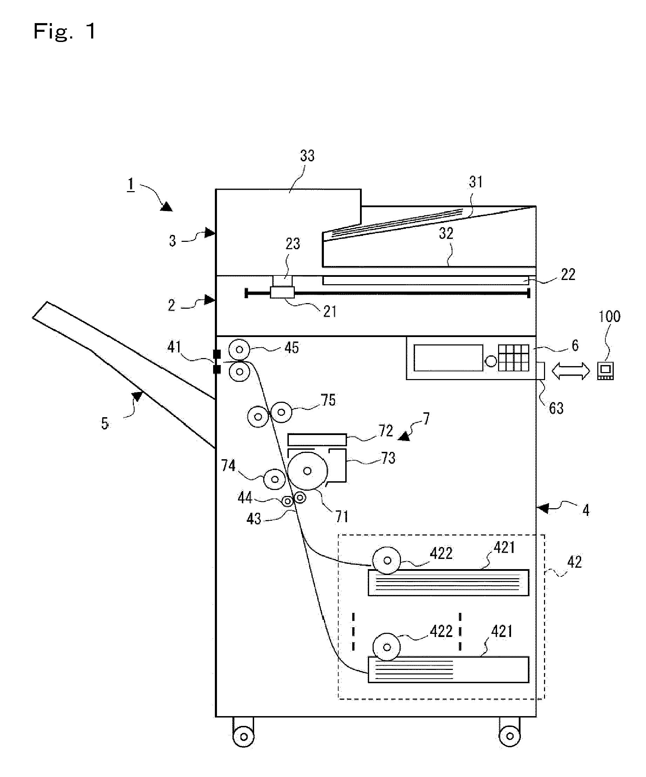

Next, with reference to FIG. 1, the configuration of an image forming apparatus 1 according to an embodiment of the present disclosure will be described in detail.

As shown in FIG. 1, the image forming apparatus 1 according to the present embodiment includes a document reading portion 2, a document feeding portion 3, a main body portion 4, a stack tray 5, an operation panel portion 6, and a storage medium connection portion 63.

The document reading portion 2 is provided above the main body portion 4, and the document feeding portion 3 is provided above the document reading portion 2. The stack tray 5 is provided on a side of a discharge outlet 41 for a recording sheet which is formed on the main body portion 4. The operation panel portion 6 is provided on the front side of the image forming apparatus 1.

The document reading portion 2 includes a scanner 21, a platen glass 22, and a document reading slit 23. The scanner 21 is composed of an exposure lamp and a CCD (Charge Coupled Device) or a CMOS (Complementary Metal Oxide Semiconductor) imaging sensor, and is configured to be movable in the conveyance direction of a document conveyed by the document feeding portion 3. The platen glass 22 is a platen formed by a transparent member such as glass. The document reading slit 23 has a slit formed perpendicularly to the conveyance direction of a document conveyed by the document feeding portion 3.

The document reading portion 2 can automatically recognize the size of each sheet of document, such as name card to A3, and read (scan) an image in a range of each size.

When reading a document placed on the platen glass 22, the scanner 21 is moved to a position opposing to the platen glass 22, and scans the document placed on the platen glass 22 to read the document and acquire image data. The scanner 21 outputs the acquired image data to the main body portion 4.

When reading a document conveyed by the document feeding portion 3, the scanner 21 is moved to a position opposing to the document reading slit 23, and reads the document via the document reading slit 23 in synchronization with the conveyance operation of the document by the document feeding portion 3, to acquire image data. The scanner 21 outputs the acquired image data to the main body portion 4.

The document feeding portion 3 includes a document placement portion 31, a document discharge portion 32, and a document conveyance mechanism 33. Documents placed on the document placement portion 31 are sequentially fed one by one and conveyed to a position opposing to the document reading slit 23 by the document conveyance mechanism 33, and then the documents are discharged to the document discharge portion 32. It is noted that the document feeding portion 3 is configured to be tiltable so that the upper surface of the platen glass 22 can be opened by the document feeding portion 3 being lifted up.

Even in the case where, for example, documents in different sizes such as sheets of name card to A3 are fed, the document feeding portion 3 can feed them while correcting the inclinations thereof. It is noted that the document feeding portion 3 can also be configured to read a map in a state where the map is attached on a predetermined map reading sheet or the like.

The main body portion 4 includes an image forming portion 7, and also includes a sheet feed portion 42, a sheet conveyance path 43, a conveying roller 44, and a discharge roller 45. The sheet feed portion 42 includes a plurality of sheet feed cassettes 421 for respectively accommodating recording sheets having different sizes or directions, and a sheet feed roller 422 for feeding one by one recording sheets from each sheet feed cassette 421 to the sheet conveyance path 43.

The sheet feed roller 422, the conveying roller 44, and the discharge roller 45 function as a conveyance portion. A recording sheet is conveyed by the conveyance portion. A recording sheet fed by the sheet feed roller 422 to the sheet conveyance path 43 is conveyed by the conveying roller 44 to the image forming portion 7.
Then, the recording sheet having some record applied thereto by the image forming portion 7 is discharged by the discharge roller 45 to the stack tray 5.

The operation panel portion 6 has a display portion such as an LCD, a start key, a numerical keypad, a button for switching an operation mode such as copy, FAX transmission, or scanner, a button or a touch panel for giving an instruction for execution of a job relevant to print, transmission, storage, record, or the like of a selected document, and the like. That is, the operation panel portion 6 receives a user's instruction for various jobs of the image forming apparatus 1. In addition, by the operation panel portion 6, each user information of account information 90 can be inputted or changed.

Further, in the case of installation in a store such as a convenience store, a money charging portion (not shown) for inserting a coil or paying with electronic money is connected to the operation panel portion 6.

A storage medium connection portion 63 is a reader/writer or the like connected to a storage medium 100.

The storage medium connection portion 63 may be connected to the storage medium 100 or various types of devices wirelessly or optically, or may be connected in a wired manner, i.e., by direct contact between terminals. The storage medium connection portion 63 in the case of wireless connection has a transmission/reception portion including an antenna and a demodulator for RF, NFC, Bluetooth (registered trademark), or the like, an infrared light transmission/reception portion for IrDA, or the like. The storage medium connection portion 63 in the case of wired connection has a terminal, a connector, or the like adapted to reading and writing for the storage medium 100.

Further, the storage medium connection portion 63 includes a USB host portion for controlling access with the storage medium 100, or an N/W interface portion, a USB interface portion, and the like for controlling communication with another terminal.

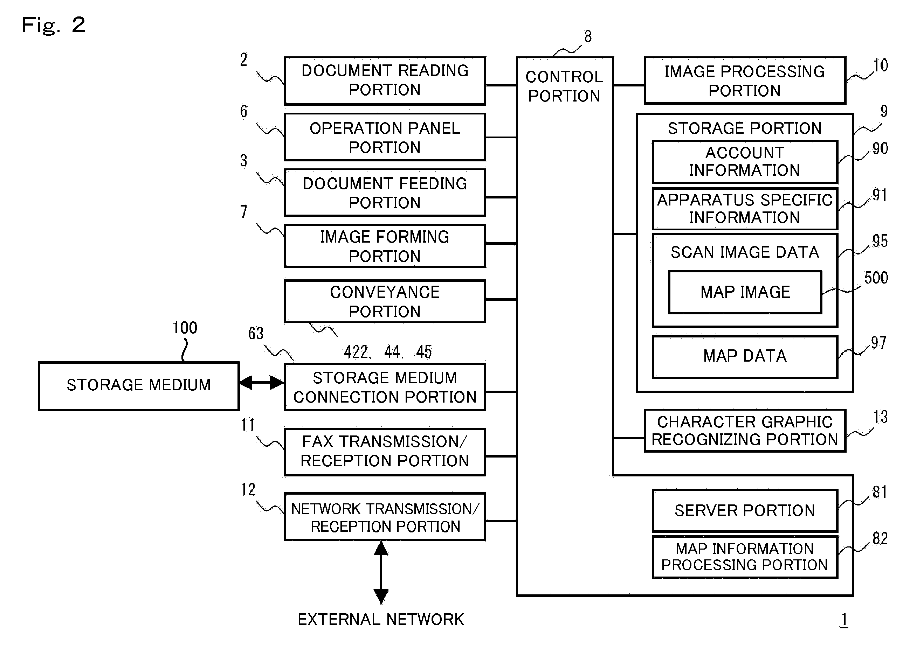

The storage medium 100 connected to the storage medium connection portion 63 functions as a storage portion, as in a storage portion 9 (see FIG. 2).

The storage medium 100 is any of various types of flash memories such as a USB memory, an SD card, an xD card, or a memory stick, or various types of devices having a storage medium therein such as an RFID (Radio Frequency IDentification) card, a smartphone, a tablet, a PDA, a USB-connection HDD, a digital camera, or a video camera, for example.

The storage medium 100 stores image data, print data, other document data, and the like containing a map scanned by the image forming apparatus 1 or another terminal (not shown) such as a PC or a smartphone of a user.

In addition, upon execution of a file transmission job, the storage medium 100 can also store scan image data 95 in which a map range has been replaced with image data of map data 97 as described later.

It is noted that the storage medium 100 may store information used for user authentication, or the like. In addition, the storage medium 100 may store a file of another document or picture, or the like.

The image forming portion 7 includes a photosensitive drum 71, an exposure portion 72, a developing portion 73, a transfer portion 74, and a fixing portion 75.

The exposure portion 72 is an optical unit including a laser device, an LED array, a mirror, a lens, and the like. The exposure portion 72 outputs light or the like based on image data to expose the photosensitive drum 71, thereby forming an electrostatic latent image on the surface of the photosensitive drum 71.

The developing portion 73 is a developing unit for developing the electrostatic latent image formed on the photosensitive drum 71 by using toner. That is, the developing portion 73 forms a toner image based on the electrostatic latent image, on the photosensitive drum 71. The transfer portion 74 transfers the toner image formed on the photosensitive drum 71 by the developing portion 73, onto a recording sheet. The fixing portion 75 heats the recording sheet having the toner image transferred thereon by the transfer portion 74, thereby fixing the toner image on the recording sheet.

FIG. 2 is a block diagram showing the schematic configuration of the image forming apparatus 1. The document reading portion 2, the document feeding portion 3, the conveyance portion (sheet feed roller 422, conveying roller 44, discharge roller 45), the operation panel portion 6, and the image forming portion 7 (image forming portion) described above are connected to a control portion 8, and their operations are controlled by the control portion 8. In addition, the storage portion 9 (storage portion), an image processing portion 10 (image processing portion), a FAX transmission/reception portion 11, a network transmission/reception portion 12, a character graphic recognizing portion 13 (character graphic recognizing portion), and the like are connected to the control portion 8.

The control portion 8 is an information processing portion such as a microcomputer having a ROM (Read Only Memory), a RAM (Random Access Memory), and the like. The ROM has stored therein a control program for controlling operation of the image forming apparatus 1.

The control portion 8 and the image processing portion 10 read out the control program stored in the ROM, and expand the control program on the RAM, thereby controlling the entire apparatus in accordance with predetermined instruction information inputted from the operation panel portion 6.

In addition, the control portion 8 includes a server portion 81 (map data acquiring portion), and a map information processing portion 82 (a map area information estimating portion, an additional information adding portion, a map image replacing portion, a keyword acquiring portion, a location searching portion, and a route searching portion).

The server portion 81 is a server using an internet protocol such as a WWW (World Wide Web) server, an SMTP (Simple Mail Transfer Protocol)/POP3 (Post Office Protocol) server, an SMB (Server Message Block) server, or an FTP (File Transfer Protocol) server. The server portion 81 acquires, via the network transmission/reception portion 12, map data 97 from a server (not shown) of a map service on a so-called cloud by an API of a server for providing a map. In addition, the server portion 81 can also acquire scan image data 95, print data, or the like from another image forming apparatus 1 or a terminal (not shown) such as a PC (Personal Computer) or a smartphone of a user by a network print function. In addition, the server portion 81 can also perform an operation such as uploading updated map data to a server on a so-called cloud by a JSP (Java (registered trademark) servlet) or a CGI (Common Gateway Interface).

It is noted that the server portion 81 may include a server such as an SSH server for calling a program or the like stored in the storage portion 9 of the image forming apparatus 1, or each function.

The map information processing portion 82 recognizes a map image from scan image data 95 obtained by scanning or the like by the document reading portion 2, and causes the character graphic recognizing portion 13 to perform OCR (Optical Character Reader, Optical Character Recognition) processing. Then, the map information processing portion 82 causes the server portion 81 to acquire map data 97 based on position estimation information. Further, the map information processing portion 82 draws the acquired map data 97 on the display portion of the operation panel portion 6, dialogically acquires an instruction from a user, and adds the present position or a navigation indication. Finally, the map information processing portion 82 replaces a portion corresponding to a map image on the scan image data 95 with the map data 97 containing the above addition. The map information processing portion 82 causes various jobs to be performed for the scan image data 95 in which the portion of the map image has been replaced, such as recording into a recording sheet by the image forming portion 7, facsimile transmission by the FAX transmission/reception portion 11, or storage into the storage medium 100 or a server (not shown).

It is noted that the map information processing portion 82 may be provided as a module or a program of JSP or CGI of the server portion 81.

The storage portion 9 is a storage portion using a storage medium such as a semiconductor memory or an HDD (Hard Disk Drive). The storage portion 9 stores image data scanned by the document reading portion 2, image data subjected to image processing by the image processing portion 10, data of a print document transmitted from a user's terminal, various files read out from the storage medium 100, data of a thumbnail image, and the like. The storage portion 9 may have areas for storage folders of respective users.

The details of data stored in the storage portion 9 will be described later.

The image processing portion 10 is a control computing portion of a DSP (Digital Signal Processor) or a GPU (Graphics Processing Unit). The image processing portion 10 is a portion for performing predetermined image processing for image data, and performs various image processes such as expansion/reduction processing or image improvement processing such as density adjustment or tone adjustment, for example.

The image processing portion 10 converts an image read by the document reading portion 2 into a file unit in a format such as PDF or TIFF, and then stores the converted image as scan image data 95 into the storage portion 9.

The FAX transmission/reception portion 11 is a portion for performing transmission or reception of facsimile, and is connected to a normal telephone line or ISDN line, or the like. In addition, the FAX transmission/reception portion 11 can store a received facsimile image into the storage portion 9. In addition, the FAX transmission/reception portion 11 can also transmit, by facsimile, image data stored in the storage portion 9, instead of printing by the image forming portion 7.

The network transmission/reception portion 12 is a network connection portion including a LAN board, a wireless transmission/reception device, a telephone dialer, a coupler, or the like for establishing connection to a network.

The network transmission/reception portion 12 can transmit or receive data through a line for data communication and transmit or receive a voice signal through a voice telephone line.

The character graphic recognizing portion 13 is a control computing portion such as an OCR (Optical Character Reader) or a DSP for performing optical character recognition or graphic recognition. The character graphic recognizing portion 13 distinguishes portions of a map and a document on image data scanned by the document reading portion 2, and recognizes, particularly, character information or graphic information (hereinafter, referred to as "character graphic information") of the map.

The character graphic recognizing portion 13 can distinguish a line drawing such as a map frame, a road, or a railway, and a character. Therefore, even if character graphic information such as a place name, a station name, an intersection name, or a scale is written over a line drawing in a map, the character graphic recognizing portion 13 can distinguish such character graphic information. In addition, the character graphic recognizing portion 13 can also recognize graphic information such as a traffic light, a map symbol, a logo of a store or a facility, a "marker" indicating a specific location in a map. Further, the character graphic recognizing portion 13 can also recognize a logo or a mark of a company or an organization, a one/two-dimensional barcode, or the like, as character graphic information.

It is noted that in the image forming apparatus 1, the control portion 8, the image processing portion 10, and the character graphic recognizing portion 13 may be integrally formed as in a GPU-built-in CPU or the like, or a chip-on-module package.

### (Configuration of storage portion 9)

Here, the details of data stored in the storage portion 9 will be described. The storage portion 9 stores account information 90, apparatus specific information 91, scan image data 95, and map data 97.

The account information 90 is a database storing various types of information such as authority information, money charging information, a mail address, a transmission destination, an address, or a credit card number for each user's account. A user can input and record, in the account information 90, various types of information about the user from the operation panel portion 6, a user's terminal, or the like.

In addition, every time a document containing a map is read by the document reading portion 2, a user can be recorded as a guest in the account information 90.

The apparatus specific information 91 includes an apparatus specific ID including a serial number, a production number, a specific number, or the like of the image forming apparatus 1, and information such as a location (position) where the image forming apparatus 1 is placed, address information, the kind of a store or a business place at the location, and information about whether the image forming apparatus 1 is in a store mode in which the image forming apparatus 1 is placed in a store, or in a general use mode.

In addition, the apparatus specific information 91 also includes a common key, a public key, an encryption key, and the like needed for encryption or decode.

The scan image data 95 is, mainly, image data read by the document reading portion 2 and subjected to image processing by the image processing portion 10.

The scan image data 95 is a file of a bitmap image of RGB color, monochrome, or grayscale, a file slightly compressed by a method such as run length or LZW, or the like. In addition, the scan image data 95 may be data already converted into a format of PDF, TIFF, or the like by the image processing portion 10 or the control portion 8.

In addition, when a user brings and connects the storage medium 100 to the storage medium connection portion 63, data of a map or a document, image data, or the like stored in the storage medium may be the scan image data 95.

As described later, the scan image data 95 includes a map image 500 as a map range.

The map data 97 includes image data of a map and data of characters or numerical values for facility explanation or the like, acquired by accessing a server of a map service with a map API (Application Programming Interface) open to the public, such as Google (registered trademark) map, for example.

In addition, the map data 97 may include, as additional information, numerical data, character data, or the like including the coordinates of the present location, a location of a marker in a map, a location of a search result of keyword searching by a user, a destination, a route of navigation, or the like. Each additional information can be added later to the already acquired map data 97 by the map information processing portion 82. The server portion 81 may acquire map data 97 to which each additional information has been added.

It is noted that the map data 97 may include map data and data of building information or the like about the vicinity including an area where the image forming apparatus 1 is placed, which are, for example, downloaded from a server (not shown) in advance. In addition, the map data 97 may include map data of a broad area that allows searching by various keywords or route searching. Thus, it becomes possible to search for a map without connecting the image forming apparatus 1 to a network.

Here, when a user carries a printed map and visits a destination, it may be difficult to recognize the relationship between a position on the map and the present location, or the like. In addition, if a building as a landmark has changed, or if, in the first place, the map is not accurate, it may be difficult to arrive at an address on the map.

However, in the case of conventional map service on the Web, when it is difficult for a user to recognize a map, the user can only write a note or the like by hand on an already printed map, and thus the conventional map service is not helpful. Considering the above, as described below, the image forming apparatus 1 newly prints a map containing additional information, based on a map carried by a user, thereby improving convenience for the user.

### {Map information adding processing by image forming apparatus 1}

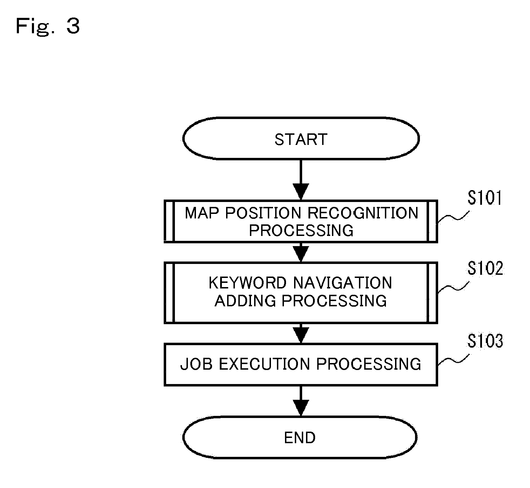

Here, with reference to FIG. 3, map information adding processing by the image forming apparatus 1 according to the embodiment of the present disclosure will be described.

In the map information adding processing of the present embodiment, a document containing a map printed by a user is read by the image forming apparatus 1 placed in, for example, a convenience store or the like. Then, additional information such as the present location, a building as a landmark specified by keyword searching, or directions (route) specified by navigation searching is added, and the resultant map is newly printed. Specifically, when a document containing a map brought by a user is read and if a map is drawn on the read data, additional information is added. That is, an area corresponding to the drawn map is estimated from the scanned map image, a map having the same coordinates as those of the estimated area is acquired by a map API, and then additional information is added to the map through dialogue with a user. Thereafter, a map based on the added information is acquired to replace the scanned map, and then the resultant data is newly printed, thus reducing a load for a user to recognize the relationship between the map and the present location or the like, whereby convenience can be improved.

The map information adding processing is mainly realized by the control portion 8 executing a program and the like stored in the storage portion 9 in cooperation with each portion by using a hardware resource.

Hereinafter, with reference to a flowchart in FIG. 3, the summary of the map information adding processing will be described step by step.

### (Step S101)

First, the map information processing portion 82 performs map position recognition processing.

The map information processing portion 82 causes the document reading portion 2 to scan a document containing a map printed by a user. Then, the map information processing portion 82 causes the character graphic recognizing portion 13 to perform OCR for the scan image data 95, causes a user to select whether or not the OCR result is as intended by the user, and then estimates an area specified by the map in the document. Then, the map information processing portion 82 acquires map data 97 of the same area from the server portion 81 by a map API. That is, the map position recognition processing is a phase of position estimation of a map.

### (Step S102)

Next, the map information processing portion 82 performs keyword navigation adding processing.

The map information processing portion 82 adds additional information through dialogue with a user based on the map data 97 acquired by the map position recognition processing. Here, the present location or the like is added to the map data 97, and a location as a destination is added based on a keyword inputted by the user. Then, the resultant map data 97 is acquired again, to perform navigation by adding a route from the present location to the destination. That is, the keyword navigation adding processing is a phase of addition of additional information to the map.

Thereafter, the map information processing portion 82 overwrites the map range on the scan image data 95, based on the map data 97, and causes the user to designate an output method of a job.

### (Step S103)

Next, the map information processing portion 82 performs job execution processing.

The map information processing portion 82 executes various jobs such as printing, facsimile transmission, storage into the storage medium 100, or file transmission, for the scan image data 95 in which the map range has been overwritten.

Thus, the map information adding processing according to the embodiment of the present disclosure is finished.

### {Details of map position recognition processing}

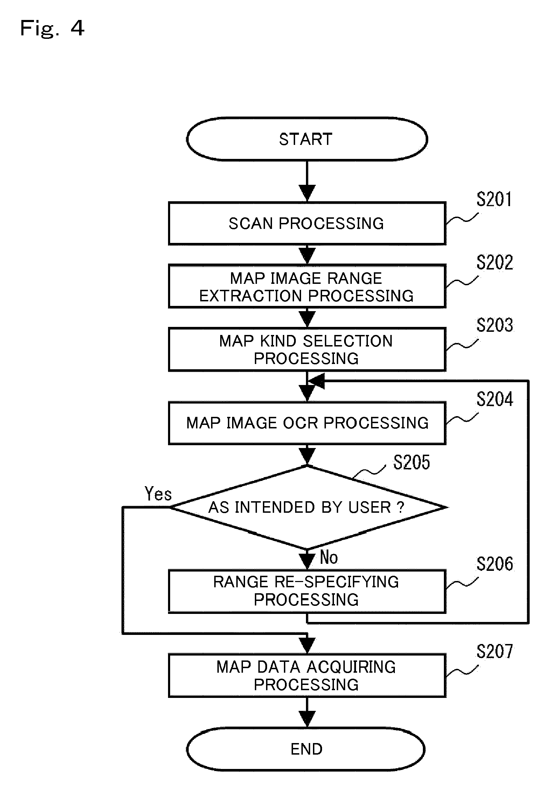

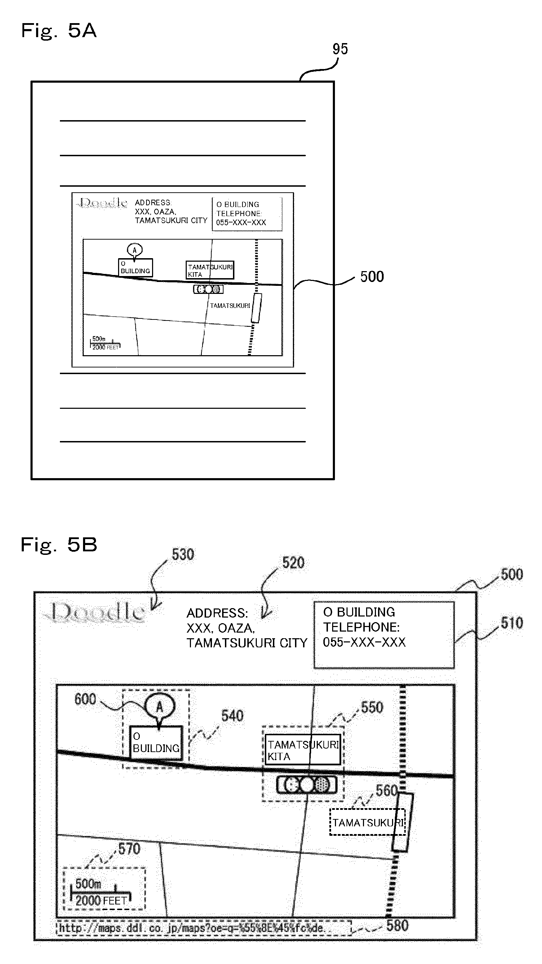

Next, with reference to FIGS. 4, 5A and 5B, the details of the map position recognition processing will be described.

### (Step S201)

First, the map information processing portion 82 performs scan processing.

Here, a document containing a map printed thereon is placed on the document placement portion 31 of the document feeding portion 3.

In this state, by the operation panel portion 6, a user gives an instruction for a job to be executed for scanned image data, such as scan, FAX, mail, copy, storage folder, or file transmission. The user can also give, as an instruction for a job, other instructions about a transmission destination telephone number of FAX, a mail address for mail transmission, the number of copies, a sort method, or the like. In addition, at this time, the user can also indicate explicitly that the document contains a map range and the user desires to add information.

In addition, along with this, in the case where the image forming apparatus 1 is of a store-placed type, the user can also insert a coin or the like into the money charging portion (not shown) and perform a money charging operation or an authentication operation by an NFC or the like. At this time, the authentication can also be performed by the operation panel portion 6. When the authentication has been performed, the map information processing portion 82 identifies the user by referring to the account information 90. It is noted that upon the money charging or the authentication, the document reading portion 2 may allow the user to select only a job that can be operated in accordance with the user's "authority". The authentication may be performed by a membership card of a convenience store, authenticated electronic money, a credit card, or a mobile terminal of a user, for example.

Thereafter, when a user's instruction for a job is detected, the map information processing portion 82 causes the document reading portion 2 to read (scan) the document on a page-by-page basis.

The document reading portion 2 generates image data according to each size, and transmits the image data to the image processing portion 10. The image processing portion 10 performs various image processes for the image data, and stores the resultant image data as scan image data 95 into the storage portion 9.

In addition, the map information processing portion 82 can also designate, as scan image data 95, image data stored in the storage medium 100 connected to the storage medium connection portion 63 by the user, or acquire scan image data 95 from an external server or the like. In addition, data in a storage folder of a user stored in the account information 90, data of Internet print, or the like can also be designated as scan image data 95.

### (Step S202)

Next, the map information processing portion 82 performs map image range extraction processing by using the character graphic recognizing portion 13.

When the map information processing portion 82 has confirmed that the scan image data 95 has been stored into the storage portion 9, the map information processing portion 82 causes the character graphic recognizing portion 13 to recognize whether or not a map range is contained on a page-by-page basis. At this time, the character graphic recognizing portion 13 analyzes image components of the scan image data 95 by a predetermined algorithm. For example, when line segments are recognized at a predetermined rate within a range surrounded by a frame having a predetermined area, the character graphic recognizing portion 13 recognizes that a map range is present. Here, when the character graphic recognizing portion 13 has recognized a map range, the map information processing portion 82 stores the map range of the scan image data 95 into the storage portion 9. In the following description, image data of the map range of the scan image data 95 is referred to as a map image 500.

In an example of the scan image data 95 in FIG. 5A, the character graphic recognizing portion 13 recognizes the map image 500 drawn at the middle of printing of a document.

### (Step S203)

Next, the map information processing portion 82 performs map kind selection processing.

The map information processing portion 82 previews the scan image data 95 in which the map image 500 has been detected, on the display portion of the operation panel portion 6. At this time, the map information processing portion 82 indicates the detected map range by a frame, color change, or the like. In this state, the map information processing portion 82 causes the user to select the kind of the map. The map information processing portion 82 causes the user to select the name of a used map service, a map that is schematically shown, a handwritten map, or the like, as the kind of the map.

It is noted that when no map range has been detected because the map is a schematic map, a handwritten map, or the like, the map information processing portion 82 may display this fact on the display portion and cause the user to select a map range.

In addition, when, in the first place, no map range exists, or when the detection is error, the user may be caused to indicate this fact.

In addition, the map information processing portion 82 may allow the user to directly draw a map by using the touch panel of the operation panel portion 6, and acquire the drawn map as map image 500 of the scan image data 95.

### (Step S204)

Next, the map information processing portion 82 performs map image OCR processing by using the character graphic recognizing portion 13.

When a map range is present on the scan image data 95, the map information processing portion 82 instructs the character graphic recognizing portion 13 to perform OCR. The character graphic recognizing portion 13 performs OCR for the map image, acquires character graphic information, and stores the character graphic information into the storage portion 9.

The map information processing portion 82 specifies an area shown on the map, based on the recognized character graphic information, and causes the server portion 81 to estimate the area by using an API of a map service, to search for the map. At this time, if a map service has been selected in step S203, the map information processing portion 82 instructs the server portion 81 to preferentially use this map service.

In addition, when a marker has been detected on the map image 500, the map information processing portion 82 stores a building at a location indicated by the marker into the storage portion 9. In addition, the map information processing portion 82 stores a location of an address of the map acquired by the OCR, as a destination, into the storage portion 9. At this time, if the location indicated by the marker is the same as the location of the address of the map acquired by the OCR, the map information processing portion 82 stores the location as indication of the destination on the map into the storage portion 9. The map information processing portion 82 can instruct the character graphic recognizing portion 13 to preferentially recognize a marker specific to the map service selected in step S203.

With reference to an example in FIG. 5B, the character graphic recognizing portion 13 performs OCR for the map image 500, thereby recognizing character graphic information 510 that is a note box, character graphic information 520 that indicates an address of the map, character graphic information 530 that is a logo of the map service, character graphic information 540 about a building containing a marker 600, character graphic information 550 that contains a graphic of an intersection and the intersection name, character graphic information 560 that is a station name, character graphic information 570 that indicates a scale of the map, character graphic information 580 that is a URL or the like indicating the map service and the center location on the map or the position of the marker, and the like. Based on these pieces of information, the server portion 81 accesses the map service, performs searching and the like, and estimates the area.

It is noted that the character graphic recognizing portion 13 may perform OCR also for a character part outside the map image 500 on the scan image data 95. The map information processing portion 82 can also estimate the kind of the map service, the area of the map, the address, and the like from information about the character part.

In addition, the character graphic recognizing portion 13 may recognize the kind of the map service from a logo as shown by the character graphic information 530, the URL of the character graphic information 580, and the like in FIG. 5B.

### (Step S205)

Next, the map information processing portion 82 determines whether or not a result is as intended by the user.

The map information processing portion 82 displays, on the display portion of the operation panel portion 6, candidates of areas estimated from the image data of the map range of the scan image data 95, to confirm whether or not there is a candidate coinciding with the user's intension. If there is a candidate coinciding with the user's intension, the map information processing portion 82 determines Yes. In other cases including the case where no map has been searched for, the map information processing portion 82 determines No.

In the case of Yes, the map information processing portion 82 shifts the process to step S207.

In the case of No, the map information processing portion 82 shifts the process to step S206.

### (Step S206)

If the OCR result for the map is not as intended by the user, the map information processing portion 82 performs range re-specifying processing.

The map information processing portion 82 causes the user to specify again a map range on the scan image data 95 by the operation panel portion 6 so as to rectify error or the like. At this time, the user may be caused to specify a part of the map range. Then, the map information processing portion 82 displays a result of the optical character recognition performed by the character graphic recognizing portion 13, to allow the user to view the result, thus performing reconfirmation.

In addition, the map information processing portion 82 may allow the user to input an area name or the like by the operation panel portion 6. The area name or the like may be specified not only by a specific address but also to an extent of city/ward/town/village, for example.

Thereafter, the map information processing portion 82 returns the process to step S204 to perform OCR again based on the specified range indicating a map, or causes the server portion 81 to acquire map data 97 based on the area name.

### (Step S207)

If the OCR result for the map is as intended by the user, the map information processing portion 82 performs map data acquiring processing.

The map information processing portion 82 causes the server portion 81 to download map data 97 of the estimated area into the image forming apparatus 1 by an API of a map service, and stores the map data 97 into the storage portion 9. At this time, the map information processing portion 82 stores, as well as image data of the map, additional information such as information about the present location, information about the area name, various stores, or the like, and information about the range of coordinates indicating longitude and latitude of the image data of the map data 97, the coordinates of the marker, a building indicated by the marker, or the like, so as to be included in the map data 97.

Thus, the map position recognition processing according to the embodiment of the present disclosure is finished.

### {Details of keyword navigation adding processing}

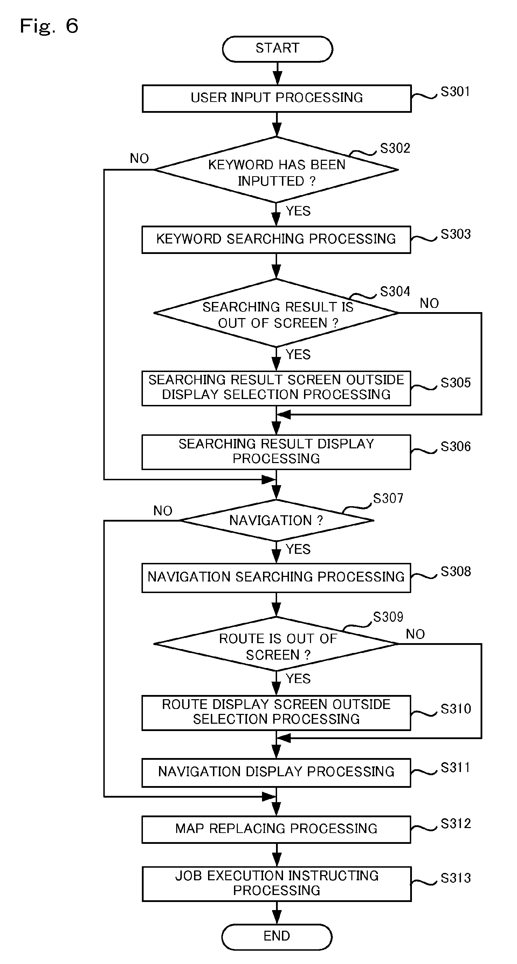

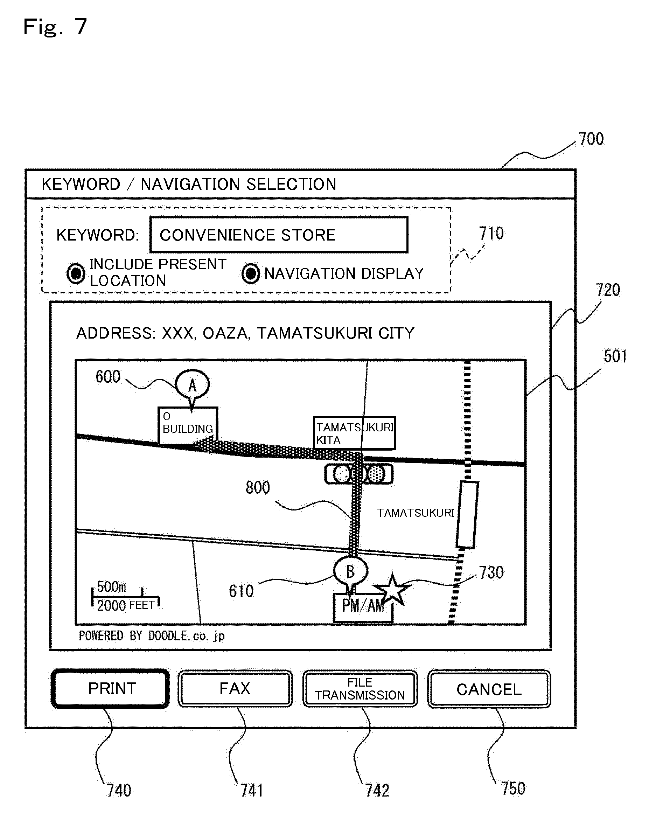

Next, with reference to FIGS. 6 and 7, the details of the keyword navigation adding processing will be described.

### (Step S301)

First, the map information processing portion 82 performs user input processing.

In this processing, the map information processing portion 82 draws and displays the map data 97 acquired by the map position recognition processing, on the display portion of the operation panel portion 6, and acquires a keyword or an instruction for the kind of additional information to be added to the map, or the like from a user.

With reference to FIG. 7, a screen example 700 shows a screen displayed on the display portion of the operation panel portion 6 by the map information processing portion 82.

A display box 710 is an input box for causing a user to input a keyword to be searched for, or a display area in which a check box or the like is drawn with regard to whether or not to contain the present location which is the placement position of the image forming apparatus 1 in the map or whether or not to display navigation. Any keyword may be inputted by a user in the display box 710 as long as the keyword can be searched for by a map service. For example, the type of a building such as a convenience store, a post office, a station, or a restaurant, a specific address, specific coordinates, a telephone number for searching, or the like may be inputted.

A display box 720 is a display area in which the map data 97 acquired by the map position recognition processing and a map image 501 drawn again by processing described below are displayed.

Here, the map information processing portion 82 acquires, as a user's instruction, information inputted to the display box 710 by the user who has viewed the display box 720.

### (Step S302)

Next, the map information processing portion 82 determines whether or not a keyword has been inputted. If a keyword is acquired, the map information processing portion 82 determines Yes. Otherwise, the map information processing portion 82 determines No.

In the case of Yes, the map information processing portion 82 shifts the process to step S303. In the case of No, the map information processing portion 82 shifts the process to step S307.

### (Step S303)

Next, the map information processing portion 82 performs keyword searching processing.

The map information processing portion 82 causes the server portion 81 to search for the inputted keyword by an API of a map service. As a result of the searching, if there is at least one corresponding location, the map information processing portion 82 causes the server portion 81 to acquire again a map containing the location corresponding to the searching result, and stores the map as map data 97 into the storage portion 9.

As a result of the searching, if there is no location corresponding to the keyword, the map information processing portion 82 displays a dialogue such as "there is no searching result" on the display portion of the operation panel portion 6, to prompt the user to input another keyword.

It is noted that the map information processing portion 82 may perform the keyword searching from the maps or the database stored in advance in the storage portion 9.

### (Step S304)

Next, the map information processing portion 82 determines whether or not the location corresponding to the result of keyword searching is out of the range of coordinates of the map data 97. Here, if the coordinates of all the locations corresponding to the keyword searched for by the API as described above are not within the range of coordinates of the map data 97, the map information processing portion 82 determines Yes. Otherwise, that is, if there is at least one location within the range of coordinates of the map data 97, the map information processing portion 82 determines No.

In the case of Yes, the map information processing portion 82 shifts the process to step S305. In the case of No, the map information processing portion 82 shifts the process to step S306.

### (Step S305)

If the coordinates of the location corresponding to the searched keyword are out of the range of coordinates of the map data 97, the map information processing portion 82 performs searching result screen outside display selection processing.

Since the location is out of the range of coordinates of the map data 97, that is, out of the screen, the map information processing portion 82 displays, on the display portion of the operation panel portion 6, a dialogue for prompting the user to select whether or not to display the location, and acquires an instruction from the user.

If the user's instruction is to "display", the map information processing portion 82 causes the server portion 81 to acquire again a map containing the location corresponding to the searching result by using an API of a map service. At this time, the server portion 81 acquires image data of the map data 97 whose scale is kept as it is and whose size is enlarged. That is, even in the case where the searching result is out of the range of coordinates, it is possible to acquire again a map containing the nearest location of the searching result.

If the user's instruction is to "not display", the map information processing portion 82 notifies the user that the searching has been failed, to prompt the user to input another keyword.

Thereafter, the map information processing portion 82 shifts the process to step S306. It is noted that the map information processing portion 82 may acquire image data of the map data 97 whose image size is kept as it is and whose map scale is enlarged.

### (Step S306)

Here, the map information processing portion 82 performs searching result display processing.

The map information processing portion 82 draws and displays, on the display portion of the operation panel portion 6, the map data 97 that has been acquired again so that the coordinates of the searched location has been added thereto.

Referring to FIG. 7 again, the map information processing portion 82 draws again a map as shown by the map image 501 on the display box 720 by using the map data 97 to which the location corresponding to the searching result has been added. At this time, the map information processing portion 82 displays the searching result on the map as shown by a marker 610. Thus, for example, when the user searches by a keyword "convenience store", if at least one convenience store is found within the range of coordinates of the map data 97, the location thereof can be displayed.

It is noted that the map information processing portion 82 may cause the user to select an unnecessary searching result by the touch panel or the like, and delete the selected searching result.

If the user has checked a box of "include present location" in the display box 710, the map information processing portion 82 may acquire the placement location of the image forming apparatus 1 from the apparatus specific information 91 and display the map data 97 to which the acquired location has been added. At this time, the map information processing portion 82 may draw a present location mark 730 indicating the present location in the display box 720 in FIG. 7. A location for which a marker has been already displayed, a location corresponding to the searching result, and the present location can be selected as a start location, a goal location, or a via point in navigation described below.

### (Step S307)

Next, the map information processing portion 82 determines whether or not the user has selected display of navigation. If the user has selected navigation display, that is, in the example of FIG. 7, if the corresponding check box has been checked in the display box 710, the map information processing portion 82 determines Yes. Otherwise, the map information processing portion 82 determines No.

In the case of Yes, the map information processing portion 82 shifts the process to step S308. In the case of No, the map information processing portion 82 shifts the process to step S312.

### (Step S308)

If the display of navigation has been selected, the map information processing portion 82 performs navigation searching processing.

First, the map information processing portion 82 displays, as a list, a location for which a marker has been already displayed like the markers 600 and 610 in FIG. 7, a location corresponding to the searching result, the present location, a destination, and the like, on the display portion of the operation panel portion 6, and causes the user to select a start location and a goal location from the list. At this time, the map information processing portion 82 may cause the user to newly specify a start location and a goal location by the touch panel of the operation panel portion 6, input of a keyword, or the like. In addition, the map information processing portion 82 may set the present location at a start location as an initial value (default). Further, the map information processing portion 82 may cause the user to newly specify a via point other than a start location and a goal location, as in the above keyword input.

After a start location, a goal location, and a via point have been selected as described above, the map information processing portion 82 causes the server portion 81 to search for a route such as directions from the start location to the goal location by an API of a map service, acquires a result of the searching as, for example, collection data of coordinates of line segments, and stores the collection data into the storage portion 9.

It is noted that the map information processing portion 82 may directly search for a route by using the map data 97 stored in the storage portion 9.

### (Step S309)

Next, the map information processing portion 82 determines whether or not the route searched for in step S308 includes a part that is out of the range of coordinates of the map data 97. If there is a part out of the range, the map information processing portion 82 determines Yes. Otherwise, the map information processing portion 82 determines No.

In the case of Yes, the map information processing portion 82 shifts the process to step S310. In the case of No, the map information processing portion 82 shifts the process to step S311.

### (Step S310)

If the searched route includes a part that is out of the range of coordinates of the map data 97, the map information processing portion 82 performs route display screen outside selection processing.

Similarly to the searching result screen outside display selection processing., the map information processing portion 82 displays a dialogue indicating that the route goes out of the currently displayed map range, and causes the user to select whether or not to display the route.

If the user has selected "display", the map information processing portion 82 causes the server portion 81 to acquire map data 97 containing the searched route by using an API of a map service. If the user has selected "not display", the map information processing portion 82 draws only a part of the route, that falls within image data of map data 97, as described below.

### (Step S311)

Here, the map information processing portion 82 performs navigation display processing.

The map information processing portion 82 draws the searched route on the image data of the map data 97.

At this time, if the user has selected "not display" for the part of the route that goes out of the map range as described above, the map information processing portion 82 performs clipping of a line segment, or the like, to draw only a part that falls within the image data. Otherwise, the map information processing portion 82 draws the entirety of the searched route.

By referring to FIG. 7 again, the map information processing portion 82 draws a route 800 such that the location of the marker 610 is a start location and the location of the marker 600 is a goal location, for example.

In addition, the map information processing portion 82 draws marks or the like for the start location, the goal location, and a via point on the image data of the map data 97.

It is noted that the map information processing portion 82 may cause the server portion 81 to acquire again map data 97 on which the route has been drawn by using an API of a map service. Alternatively, the map information processing portion 82 may directly draw the route in the map image 500 of the scan image data 95 as it is before the replacement with the map data 97, by changing the color or the width of a line of a road or the like, for example.

### (Step S312)

Here, the map information processing portion 82 performs map replacing processing.

The map information processing portion 82 replaces the map range on the scan image data 95 with the image data of the map data 97.

At this time, in the case where the map range has been enlarged by the keyword navigation adding processing, the map information processing portion 82 displays a selection box on the operation panel portion 6, to cause the user to select one of the following output methods.

* To perform output by replacing the image data of the map data 97 so as to fall within a portion corresponding to the map on the scan image data 95.

* To output the image data of the map data 97 separately or so as to be divided into several pieces.

* To output the image data of the map data 97 so as to delete a part that goes out of the map range.

In the case where the image data of the map data 97 has not been enlarged, the map information processing portion 82 gives an instruction to directly overwrite the map range on the scan image data 95.

In addition, when replacing the portion corresponding to the map on the scan image data 95 with the image data of the map data 97, the map information processing portion 82 can also perform processing of scaling the image data by a predetermined factor so as to be embedded within the map range.

### (Step S313)

Next, the map information processing portion 82 performs job execution instructing processing.

The map information processing portion 82 receives information about the kind of job, designation of output method, and the like from the user, and gives a corresponding instruction for execution.

In the example of FIG. 7, when it has been detected that the user has pressed buttons 740 to 742, the map information processing portion 82 gives an instruction for outputting the job by a method corresponding to the pressed button.

The button 740 is a button for giving an instruction for printing. When having detected that this button has been pressed, the map information processing portion 82 executes a job of printing.

The button 741 is a button for giving an instruction for facsimile transmission. When having detected that this button has been pressed, the map information processing portion 82 instructs the FAX transmission/reception portion 11 to draw the scan image data 95 for which the map range has been replaced, and perform FAX transmission thereof to a specified telephone number.

The button 742 is a button for giving an instruction for file transmission to the connected storage medium 100 or a server. When having detected that this button has been pressed, the map information processing portion 82 performs file transmission of the scan image data 95 to the storage medium 100 connected to the storage medium connection portion 63, a specified image forming apparatus 1, a user's storage folder, a terminal such as a PC, a folder of a server on a so-called cloud, or the like. At this time, the map information processing portion 82 can set a file transmission destination by referring to the account information 90. In addition, the map information processing portion 82 may convert the scan image data 95 for which the map range has been replaced, into a file of a predetermined format such as PDF before transmission.

It is noted that a button 750 is a button for cancelling execution of a job. If this button is pressed, addition of information to the map is not performed, and the map range on the scan image data 95 is replaced with the original scanned image.

It is noted that the map information processing portion 82 can also store a history of job execution or the like for the user into the storage portion 9. In addition, the scan image data 95 stored in the user's storage folder can be viewed by user authentication, or can be printed again, for example.

Thus, the map position recognition processing according to the embodiment of the present disclosure is finished.

Owing to the above configuration, the following effects can be obtained.

The image forming apparatus 1 according to the embodiment of the present disclosure includes: the document reading portion 2 configured to read a document as scan image data 95; the storage portion 9 configured to store the scan image data 95; the character graphic recognizing portion 13 configured to determine a map range on the scan image data 95 stored in the storage portion 9, and recognize character information and graphic information from the map range; the server portion 81 and the map information processing portion 82 configured to estimate an area of the map based on the character information or the graphic information recognized by the character graphic recognizing portion 13, acquire map data 97 of the area of the map, and replace the map range on the scan image data 95 stored in the storage portion 9 with the map data 97; and the image forming portion 7 configured to output the replaced scan image data. Owing to the above configuration, it becomes possible for a user to view a map to which additional information such as the present location or a building has been added. Therefore, a load for recognizing the relationship between a position on a map and the present location, or the like, is reduced, whereby convenience for a user can be improved.

In addition, without printing a code indicating the correspondence to a database of maps or the like by a specific computer, it becomes possible to read a map printed on paper, acquire a detailed map for the corresponding area, and print again the map to which additional information such as the present location has been added.

In the image forming apparatus 1 according to the embodiment of the present disclosure, the server portion 81 and the map information processing portion 82 acquire a keyword inputted by a user, search for a location corresponding to the keyword, acquire again map data 97 containing the searched location, and replace the map range on the scan image data 95 stored in the storage portion 9 with the map data 97 acquired again.

Thus, it is not necessary to add additional information by a specific computer when a map is printed first as in conventional art, and it becomes possible to print a more comprehensible map to which a location as a landmark on a map has been added on the image forming apparatus 1 side. Therefore, it becomes possible to print again a map that is easier for a user to use, thus improving convenience.

In addition, in conventional art, a user adds information by a terminal such as a PC. On the other hand, the image forming apparatus 1 of the present embodiment dialogically adds information through operation of the operation panel portion 6 of the image forming apparatus 1, thereby providing an effect of making it unnecessary to use a PC for adding information.

In the image forming apparatus 1 according to the embodiment of the present disclosure, the server portion 81 and the map information processing portion 82 search for a route on the map data 97 so as to include a start location and a goal location, and replace the map range on the scan image data 95 stored in the storage portion 9 with the map data 97 on which the searched route has been drawn.

Thus, the image forming apparatus 1 can print again a map on which a route has been drawn such that the start location is the present location and the goal location is a destination. Therefore, a user can go to the destination without getting lost, by viewing the map that has been printed again, thus improving convenience for a user.

In the image forming apparatus 1 according to the embodiment of the present disclosure, in the case where the searched location or the searched route is out of the range of image data of the map data 97 stored in the storage portion 9, the server portion 81 and the map information processing portion 82 acquire again map data 97 containing the location or the route, and replace the map range on the scan image data 95 with the map data 97 containing the location or the route, that has been acquired again.

Thus, even if the location or the route added by the image forming apparatus 1 is out of the screen of the acquired map data 97, map data 97 containing the location or the route is acquired again to replace the original one. That is, it becomes possible to, for example, print again a map such that a location as a landmark is clarified and easily recognizable, thus improving convenience for a user.

It is noted that for the image forming apparatus of the present disclosure, it is also possible to, by a driver (Driver Software) or a dedicated application (Application Software) of a terminal such as a PC or a smartphone, upon printing a map of a map service, embed data such as the kind of a map service or coordinates by means of character information, a bar code, an electronic watermark, or the like that can be recognized by the character graphic recognizing portion 13.

Thus, it is not necessary to cause a user to select the kind of a map service, and it becomes possible to select an area without fail.

It is noted that the present disclosure is also applicable to an information processing apparatus other than an image forming apparatus. That is, for example, a network scanner or a server to which a scanner is separately connected by a USB or the like may be used.

It is noted that the configuration and the operation of the above embodiment are merely examples, so it should be understood that the embodiment can be carried out with modification as necessary without deviating from the gist of the present disclosure.

It is to be understood that the embodiments herein are illustrative and not restrictive, since the scope of the invention is defined by the appended claims rather than by the description preceding them, and all changes that fall within metes and bounds of the claims, or equivalence of such metes and bounds thereof are therefore intended to be embraced by the claims.

## Claims

1. An image forming apparatus (1) comprising:
a document reading portion configured to read a document as image data (95);
a storage portion (100) configured to store the image data (95);
a character graphic recognizing portion (13) configured to determine a range of a map on the image data (95) stored in the storage portion (100), and recognize character information and graphic information from the range of the map;
a map area information estimating portion (82) configured to estimate an area of the map, based on the character information or the graphic information recognized by the character graphic recognizing portion (13);
a map data acquiring portion (81) configured to acquire map data (97) of the area of the map estimated by the map area information estimating portion (82);
an additional information adding portion (82) configured to add additional information to the map data (97) acquired by the map data acquiring portion (81);
a map image replacing portion (82) configured to replace the range of the map on the image data (95) stored in the storage portion (100) with the map data (97) containing the additional information added by the additional information adding portion (82); and
an image forming portion (7) configured to output the image data (95) in which the range of the map has been replaced by the map image replacing portion (82).

2. The image forming apparatus (1) according to claim 1, comprising:
a keyword acquiring portion (81) configured to acquire a keyword inputted by a user; and
a location searching portion (82) configured to search for a location corresponding to the keyword acquired by the keyword acquiring portion (81), wherein
the map data acquiring portion (81) acquires again the map data (97) containing the location searched for by the location searching portion (82), and
the map image replacing portion (82) replaces the range of the map on the image data (95) stored in the storage portion (100) with the map data (97) acquired again, which contains the location searched for by the location searching portion (82).

3. The image forming apparatus (1) according to claim 1 or 2, comprising a route searching portion (82) configured to search for a route on the map data (97) so as to include a start location and a goal location, wherein
the map image replacing portion (82) replaces the range of the map on the image data (95) stored in the storage portion (100) with the map data (97) on which the route searched for by the route searching portion (82) has been drawn.

4. The image forming apparatus (1) according to claim 3, wherein
in the case where the location searched for by the location searching portion (82) or the route searched for by the route searching portion (82) is out of a range of the map data (97) stored in the storage portion (100), the map data acquiring portion (81) acquires again the map data (97) containing the location searched for by the location searching portion (82) or the route searched for by the route searching portion (82), and
the map image replacing portion (82) replaces the range of the map on the image data (95) stored in the storage portion (100) with the map data (97) containing the location searched for by the location searching portion (82) or the route searched for by the route searching portion (82).

5. An image forming method comprising:
reading a document as image data (95);
storing the image data (95);
determining a range of a map on the image data (95) and recognizing character information and graphic information from the range of the map;
estimating an area of the map, based on the character information or the graphic information;
acquiring map data (97) of the area of the map;
adding additional information to the map data (97);
replacing the range of the map on the stored image data (95) with the map data (97) containing the additional information; and
outputting the image data (95) in which the range of the map has been replaced.
